Europäisches Patentamt

European Patent Office

Office européen des brevets

(19)

(11) Publication number: **0 255 960 B1**

(12) EUROPEAN PATENT SPECIFICATION

(45) Date of publication of patent specification: **08.07.92**  (51) Int. Cl.⁵: **G01F 23/16, G01L 19/04**

(21) Application number: **87111472.4**

(22) Date of filing: **07.08.87**

(54) **Differential pressure type liquid-level meter.**

(30) Priority: **08.08.86 JP 185332/86**

(43) Date of publication of application:
**17.02.88 Bulletin 88/07**

(45) Publication of the grant of the patent:
**08.07.92 Bulletin 92/28**

(84) Designated Contracting States:
**DE NL**

(56) References cited:
**US-A- 3 232 111**
**US-A- 3 999 435**
**US-A- 4 332 166**
**US-A- 4 389 888**
**US-A- 4 394 346**

(73) Proprietor: **FUJI PHOTO FILM CO., LTD.**
**210 Nakanuma Minami Ashigara-shi**
**Kanagawa 250-01(JP)**

(72) Inventor: **Saito, Hirokazu, c/o Fuji Photo Film**
**Co.,LTD.**
**No 210, Nakanuma**
**Minami-Ashigara-shi, Kanagawa(JP)**
Inventor: **Takano, Kouzo, c/o Fuji Photo Film**
**Co., LTD.**
**No. 210, Nakanuma**
**Minami-Ashigara-shi, Kanagawa(JP)**
Inventor: **Ushirokoji, Kiyoyuki, c/o Fuji Photo**
**Film Co.,LTD.**
**No. 210, Nakanuma**
**Minami-Ashigara-shi, Kanagawa(JP)**
Inventor: **Igarashi,Shigeo, c/o Fuji Photo Film**
**Co. LTD.**
**No. 210, Nakanuma**
**Minami-Ashigara-shi, Kanagawa(JP)**

(74) Representative: **Patentanwälte Grünecker,**
**Kinkeldey, Stockmair & Partner**
**Maximilianstrasse 58**
**W-8000 München 22(DE)**

## Description

Background of the Invention

The present invention relates to a differential pressure type liquid-level meter for use with a measuring receptacle, and more particularly to a differential pressure type liquid-level meter by which a high accurate liquid-level measurement can be effected for various and large quantities of liquids.

It is well known in industrial measuring to use a differential pressure gauge to measure the quantity of such liquid as industrial solutions, oils and so on contained in a receptacle by detecting the pressure difference between a pressure exerted by the object liquid and a reference pressure, for example the atmospheric pressure.

US-A 4,394,346 discloses an apparatus measuring the water level of a nuclear reactor by comparing the pressure values of the water level and an invariable reference water level with a differential pressure detector. Said conventional apparatus has a construction to prevent the water from boiling by means in which the water within the nuclear reactor is cooled with a heat exchanger in passing the water through the tube toward the differential pressure detector outside.

From US-A 3,999,435 there is known a differential pressure transmitter with a sensing diaphragm which performs correction by removing the influence from variations in temperature of the object liquid.

A housing having a well covered by the sensing diaphragm is formed with a material of a rather high coefficient of expansion (such as stainless steel). An insert, formed with a mterial of a lower coefficient of expansion (such an INVAR), is seated in the well to surround the liquid enclosed in the diaphragm. The influential variations in temperature of the object liquid are atomatically corrected in the structure of the pressure sensor in combination such a housing and an insert by varying the capacity of the well defined between the insert and the sensing diaphragm.

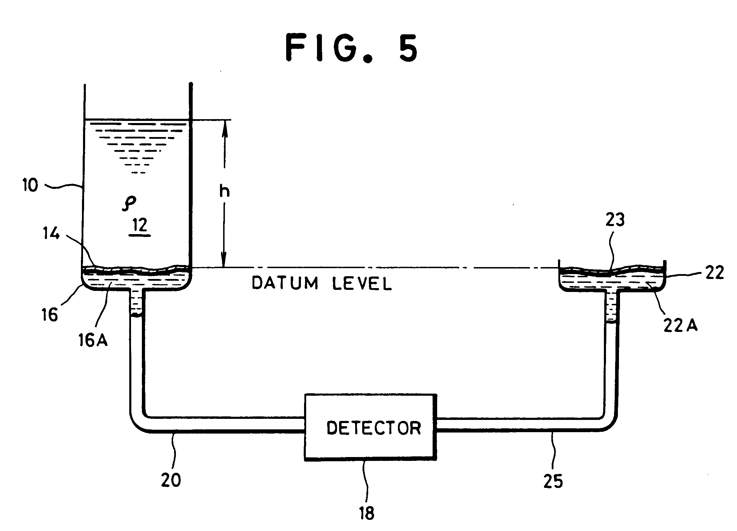

A certain differential pressure type liquid-level meter of which the fundamentals is shown in Fig. 5 comprises a measuring receptacle 10 having a measuring pressure cell 16 at the bottom thereof, a reference pressure cell 22, and a pressure difference detector 18 communicated with the pressure cells 16 and 22 by means of conduits 20 and 25. The measuring receptacle 10 is divided by a diaphragm 14 into two chambers, namely an upper chamber 11 for containing an object liquid 12 and a lower chamber as the pressure cell 16. On the other hand, the reference pressure cell 22 is closed by a diaphragm 24 exposing to the air. Between each diaphragm 14, 23 and the pressure difference detector 18, there is filled a liquid 16A, 22A sealed in each pressure cell 16, 22 and conduit 20, 25. Due to such the pressure cells 16, 22, a pressure exerted on each diaphragm 14, 23 is transmitted to the pressure difference detector 18 through the sealed liquid 16A, 22A. In the pressure difference detector, the pressure difference between the pressures exerted on the respective diaphragms 14 and 23 can be detected.

In such the differential pressure type liquid-level meter, assuming that and h are representative of a density of the subject liquid 12 and a level of the liquid 12 to be measured in the measuring receptacle 10,respectively, the total pressure P applied to the diaphragm 14 is given by the following equation:

$$P = \rho \times h + \text{atmospheric pressure} \qquad (1)$$

Therefore, the level h of the liquid 12 in the receptacle 10 can be obtained from the result of subtraction of the atmospheric pressure from the resulting total pressure P actually applied to the diaphragm 14. For this subtraction, the current atmospheric pressure is detected by the detector 18 through the pressure cell 22. Based on the pressures actually applied to the diaphragm 14 and 23, the pressure deference between the two is calculated in the detector 18. The level h of the liquid 12 in the receptacle 10 is obtained by dividing the resulting pressure difference by the density of the liquid 12.

There are well known in the art various manners of pressure difference detections such as a mechanical equilibrium method, a displacement transforming method, etc. Widely used are electrical displacement transforming detection methods which are known as a strain gauge method, a capacitance method, an inductance method, and so on.

There is, however, a problem in the conventional pressure difference type liquid-level meters that temperature changes of the subject liquid and/or an environment induce temperature changes of the sealed liquid ( which is generally a silicon oil ) 16A, 22A, in particular, the sealing liquid 16A in the pressure cell 16 adjacent to the measuring receptacle 10, resulting in an measurement error.

Specifically, letting the pressure change of the subject liquid 12 or the atmosphere which is exerted to the sealed liquid 12 or 24 through the diaphragm 14 or 23, and the volume change of the sealed liquid 16A, 22A be $\Delta P$ and $\Delta V$, respectively, when the temperature change of the sealed liquid 16, 24 is infinitesimally

2

ΔT, the pressure change ΔP is represented by the following equation:

$$\Delta P = \Delta V / \phi \qquad (2)$$

wherein $\phi$ is representative of a compliance [mm/kg] or a natural constant corresponding to an equivalent volume change which is produced when the diaphragm receives a unit pressure. The compliance depends on thickness and material of the diaphragm.

The volume change ΔV of the sealed liquid 16A, 22A is represented by the following equation:

$$\Delta V = \alpha \times \Delta T \times V \qquad (3)$$

wherein V is representative of the volume of the sealed liquid which is generally 3 to 15cc and $\alpha$ is an expansion coefficient of the sealed liquid. The expansion coefficient of the sealed liquid experimentally used was approximately $8 \times 10^{-4}$ per degree.

Therefore, the change ΔP of pressure exerted on the diaphragm can be obtained from the equations (2) and (3) in the following calculation:

$$\Delta P = \alpha^{\bullet} \Delta T \, V/\phi$$
$$= 8 \times 10^{-4} \times \Delta T \times 4 \times 10^{3} / 8 \times 10^{6}$$
$$= 4 \times 10^{-7} \times \Delta T \, [kg/mm^{2}]$$
$$= 0.4 \times \Delta T \, [mmH_{2}O]$$

Taking a water having a liquid column level h, 100mm, for the object liquid to be measured and assuming the ΔT be 3°C, a pressure change ΔP of 1.2 mmH$_2$O is produced in the sealed liquid. From this calculation, it is evident that the water having the liquid level of 100 mm is measured with an error of about 1.2 %. Therefore, the temperature changes of the sealed liquid lead to noticeable measurement errors of liquid level.

Although it is said that an accurate measurement can be effected by controlling the liquid to be measured and/or environments to have a constant temperature, it is actually hard to control the temperature of a liquid to be measured because various chemical liquids are introduced in the measuring receptacle alternately for measurement.

### Object of the Invention

It is therefore an object of the present invention to provide a differential pressure type liquid-level meter for use with a measuring receptacle in which the quantity of liquid can be measured with a high accuracy independent from the temperature of the liquid to be measured and/or the atmosphere.

### Summary of the Invention

The above object is achieved by the subject matter of claim 1.

The isothermal means of claim 1 may take any of various forms well known to those skilled in the art, for example a warm water, an electric heater, a warm air, a warm oil, and so on.

Because, according to a feature of the present invention, the temperature of the sealed liquid does not change with the termperature of the liquid to be measured very much, the accuracy of the measurement is considerably improved.

### Brief Description of the drawings

Figure 1 is a cross sectional view of a differential pressure type liquid level meter of a preferred embodiment according to the present invention;

Figure 2 is a a cross sectional view of a measurement receptacle for use with the differential pressure type liquid level meter of Fig. 1;

Figure 3 is graphs showing the experimental results of the measurement by the conventional differential type liquid level meter;

Figure 4 is graphs similar to the graphs of Fig. 3 showing the experimental results of the measurement by the differential type liquid level meter of the present invention; and

Figure 5 is a schematic illustration showing the fundamentals of a differential pressure type liquid level meter.

## Detailed description of the Invention

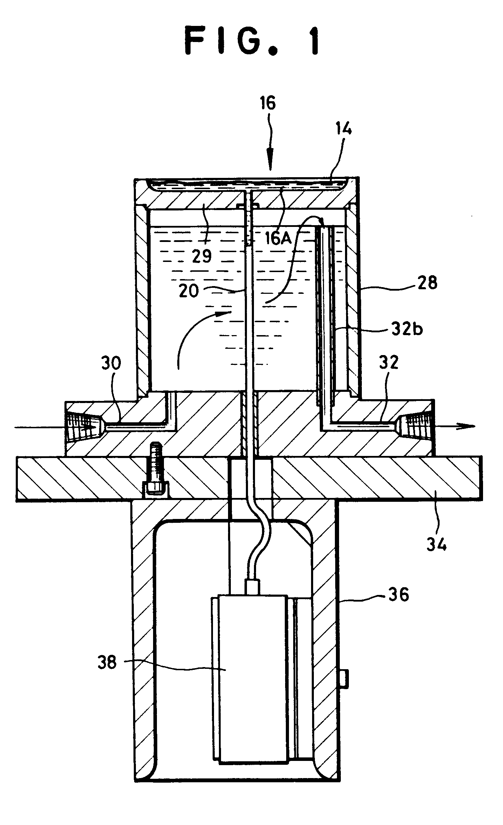

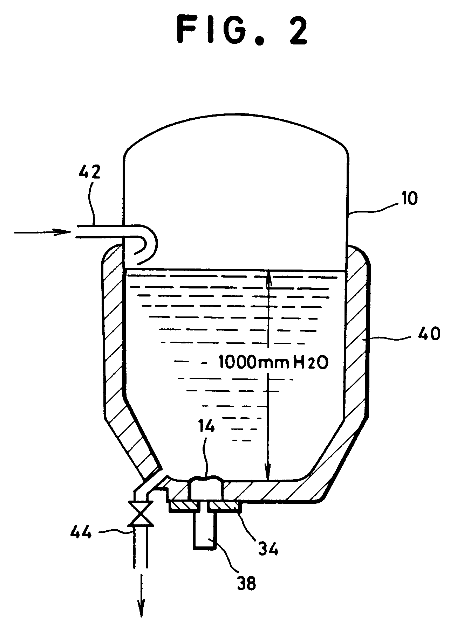

Referring to Fig. 1 showing a preferred embodiment of the pressure difference type liquid-level meter according to the present invention, to a flange 34 which is adapted to be attached to the measuring receptacle 10 shown in Fig. 2, a vessel 28 is fixed. At the top of the vessel 28 there is provided a pressure cell chamber 16 defined between a partition wall 29 and a diaphragm 14 having a thickness of approximately 0.08 mm wherein a liquid 16A is sealed. The pressure cell chamber 16 is communicated with a pressure difference detector 38 through a communication tube 20 passing inside the vessel 28 and piercing the flange 34. It should be noted that there is filled in the chamber 16 and the conduit 20 the sealed liquid 16A with no cavity so as to form a pressure cell for detecting a pressure exerted on the diaphragm 14 by an object liquid. A warm water is continuously supplied into and discharged from the vessel 28 through an inlet 30 and an outlet 32 provided at the bottom of the vessel 28. The outlet 32 is communicated with a discharge pipe 32b disposed inside the vessel 28 and extending close to the partition wall 29 so as to circulate effectively the warm water in the vessel 28. Therefore, the vessel 28 functions as a thermostatic chamber.

As is shown in Fig. 2, the pressure difference type liquid-level meter is mounted through the flange 34 to the liquid receptacle 10 partly enclosed by a jacket 40. A liquid to be measured is introduced in the receptacle 10 through an inlet 42 and discharged through an outlet 44. Under the flange 34 there is a pressure sensor 38 fixedly supported by a supporting member 36. In this embodiment, a diffusion type diode strain gauge is used for the pressure sensor 38. This strain gauge functions to convert a pressure exerted on the sealed liquid 16A through the diaphragm 14 into a change of resistance value. On the other hand, in the same manner as is shown in Fig. 5, the atmospheric pressure exerted on the sealed liquid 23A through the diaphragm 23 is detected as a reference resistance value. Therefore, based on the difference between the resistance value from the pressure sensor 38 and the reference resistance value, the quantity of the liquid in the measuring receptacle 10 can be calculated. The pressure sensor 38 used in this embodiment provides an output of 4 to 20 mA according to liquid levels between 0 and 1,000 $mmH_2O$.

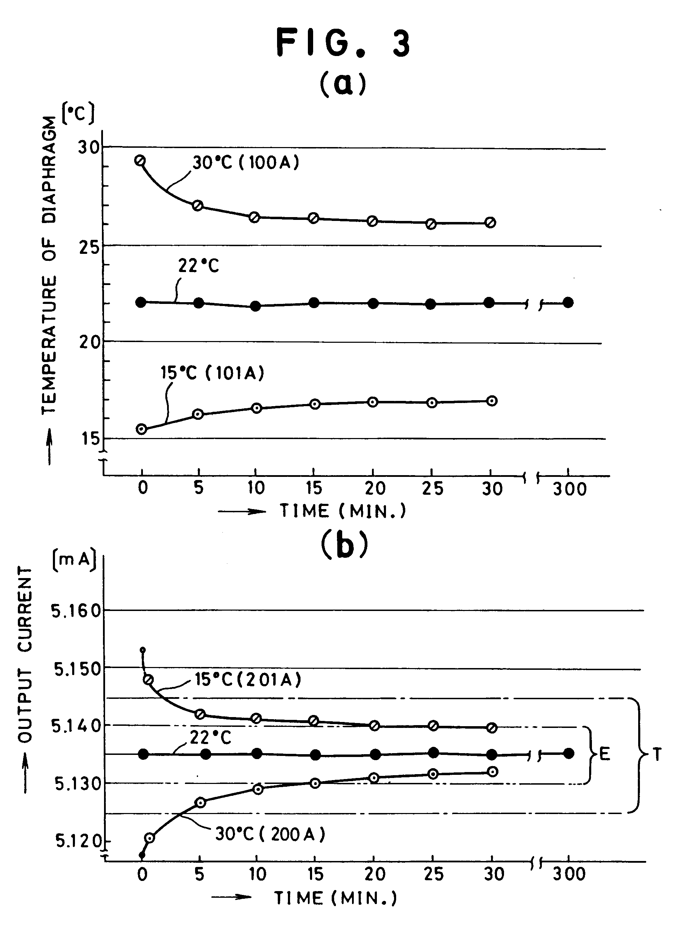

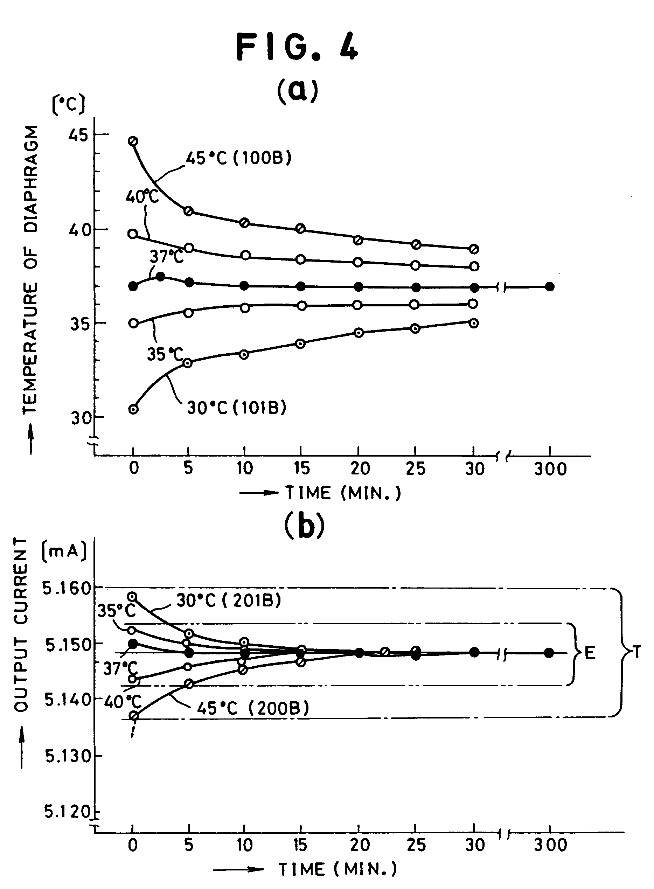

Reference is now had to Figs. 3 and 4 showing several graphs exhibiting the experimental results of liquid level measurement wherein the X-axis represents time and the Y-axis represents temperature of the diaphragm 14, 23 or output current from the pressure detector 38 which is equivalently representative of the pressure exerted on the diaphragm. The graphs (a) and (b) of Fig. 3 exhibit the results of the measurement made for the object liquid of a temperature, 15°C, 22°C, 30°C, respectively, when the sealed liquid is maintained at 22°C ( which is equal to a room temperature ), by the conventional liquid level meter. The graphs (a) and (b) of Fig. 4 exhibit the results of the measurement made for the object liquid of a temperature, 30°C, 35°C, 37°C, 40°C, 45°C, respectively, when the sealed liquid is maintained at 37°C, by the liquid level meter according to the present invention. What is evident on comparing the experimental results obtained by the conventional liquid level meter and the level meter of the present invention, in particular on comparing the measured curves 100A and 101A ( which represent the temperature change of the diaphragm 14 when the subject liquid has a temperature difference of +8°C relative to the temperature of the sealed liquid 16 ), and 100B and 101B ( which represent the temperature change of the diaphragm 14 when a subject liquid introduced has a temperature difference of -7°C relative to the temperature of the sealing liquid 16 ), respectively, is that there is no substantial difference in temperature change between the corresponding two curves.

However, as to the output current from the pressure detector 38, there is a noticeable difference between the measured curves 200A, 201A by the conventional level meter and the measured curves 200B, 201B by the level meter according to the present invention as is shown in the following table:

| OBJECT LIQUID TEMPERATURE | OUTPUT CURRENT DIFFERENCE | |
| --- | --- | --- |
| | PRESENT INVENTION | CONVENTIONAL |
| + 8°C | 0.008 mA | 0.013 mA |
| - 7°C | 0.009 mA | O.015 mA |
| Normal (0°C) | 0 mA | O mA |

As is understood from the above table, a range to which the output currents converge with time is narrow in the case of the level meter of the present invention more than in the conventional level meter.

It is evident that the conventional level meter has a measurement error approximately 1.63 times when the object liquid has a temperature difference of +8°C relative to the temperature of sealed liquid or approximately 1.67 times when the object liquid has a temperature difference of -7°C relative to the temperature of sealed liquid as much as the level meter of the present invention. Saying the above differently, because the pressure detector 38 can output current from 4 mA to 20 mA corresponding to a liquid pressure between 0 and 1,000 mmH$_2$O the measurable minimum pressure of object liquid with remaining an measurement error less than 1% is about 187.5 mmH$_2$O for the conventional level meter but about 104.2 mmH$_2$O for the level meter of the present invention.

In each graph (b) of Figs. 3 and 4, characters E and T indicate ranges wherein 10 litres of water and 20 litres of water can be measured with a measurement error less than 1%, respectively. It is apparent from the comparison of the curves that the time required to obtain a measurement accuracy better than 1% is quite shorter by the level meter of the present invention than by the conventional level meter.

It should be noted that, although a warm water is circulated in the vessel in the above-described embodiment, not only the warm water may be replaced with a warm air, warm oil or the like but also an electric heater may be used to directly heat the sealed liquid.

Although the present inventin has been fully described by way of the preferred embodiment thereof with reference to the accompanying drawings, it is to be noted that various changes and modifications are apparent to those skilled in the art. Therefore, unless otherwise such changes and modifications depart from the scope of the present invention as defined by the claims, they should be construed as included therein.

## Claims

1. A differential pressure type liquid level meter for measuring a quantity of liquid based on a pressure difference between a liquid pressure and a reference pressure, having
a measuring receptacle (10) for containing a liquid whose quantity is to be measured:
a pressure difference detector (38) and
means for producing a reference pressure and transmitting it to said pressure difference detector (38),
**characterised in that**
said differential pressure type liquid level meter further comprises pressure transmitting means comprising a diaphragm (14) and a liquid (16A) sealed between said diaphragm (14) and said pressure difference detector (38) for transmitting pressure from said liquid in said receptacle (10) to said pressure difference detector (38) and
isothermal means for maintaining said sealed liquid (16A) at a predetermined temperature, said isothermal means including a chamber (28) enclosing at least part of said sealed liquid (16A) therein and means for circulating in said chamber a heating liquid maintained at said predetermined temperature, said chamber having a bottom member closing the chamber (28), said circulating means comprising an inlet (30) for said heating liquid and an outlet (32) for said heating liquid both passing through said bottom member, said inlet (30) and outlet opening into said chamber (28) on opposite sides of said chamber, and an upright discharge pipe (32b) connected at its lower end to said bottom member and communicating with said heating liquid outlet (32), said pipe terminating at its upper end below the upper end of the chamber (28) to serve as an overflow pipe through which said heating liquid which has entered said chamber (28) through said heating liquid inlet flows after passing upwardly through said chamber (28) and from side to side across said chamber (28).

**2.** A pressure difference type liquid level meter as defined in claim 1, wherein said reference pressure is atmospheric pressure.

**3.** Pressure difference type liquid level meter as defined in claim 1, wherein said heating liquid is warm water.

**4.** A pressure difference type liquid level meter as defined in claim 1 wherein said heating liquid is warm oil.

**Revendications**

**1.** Dispositif de mesure du niveau d'un liquide du type à pression différentielle pour mesurer une quantité de liquide sur la base d'une différence de pression entre une pression de liquide et une pression de référence, comportant un récipient de mesure (10) destiné à contenir un liquide dont la quantité doit être mesurée, un détecteur de différence de pression (38) et un dispositif pour produire une pression de référence et la transmettre audit détecteur de différence de pression (38), caractérisé en ce que ledit dispositif de mesure du niveau d'un liquide du type à pression différentielle comprend en outre un dispositif de transmission de pression comprenant un diaphragme (14) et un liquide (16A) enfermé de manière étanche entre ledit diaphragme (14) et ledit détecteur de différence de pression (38) pour transmettre la pression dudit liquide dans ledit réceptacle (10) audit détecteur de différence de pression (38) et un dispositif isotherme pour maintenir ledit liquide enfermé de manière étanche (16A) à une température prédéterminée, ledit dispositif isotherme comprenant une chambre (28) contenant au moins une partie dudit liquide enfermé de manière étanche (16A) et un dispositif pour faire circuler dans ladite chambre un liquide de chauffage maintenu à ladite température prédéterminée, ladite chambre comportant un élément inférieur fermant la chambre (28), ledit dispositif de circulation comprenant une entrée (30) pour ledit liquide de chauffage et une sortie (32) pour ledit liquide de chauffage, traversant l'une et l'autre ledit élément inférieur, ladite entrée (30) et ladite sortie débouchant dans ladite chambre (28) sur les côtés opposés de ladite chambre, et une conduite d'évacuation verticale (32b) reliée à son extrémité inférieure audit élément inférieur et communiquant avec ladite sortie de liquide de chauffage (32), ladite conduite se terminant à son extrémité supérieure sous l'extrémité supérieure de la chambre (28) pour servir de conduite de trop-plein dans laquelle ledit liquide de chauffage qui a pénétré dans ladite chambre (28) par ladite entrée de liquide de chauffage s'écoule après avoir circulé vers le haut dans ladite chambre (28) et avoir traversé ladite chambre (28) d'un côté à l'autre.

**2.** Dispositif de mesure du niveau d'un liquide du type à différence de pression selon la revendication 1, dans lequel ladite pression de référence est la pression atmosphérique.

**3.** Dispositif de mesure du niveau d'un liquide du type à différence de pression selon la revendication 1, dans lequel ledit liquide de chauffage est de l'eau chaude.

**4.** Dispositif de mesure du niveau d'un liquide du type à différence de pression selon la revendication 1, dans lequel ledit liquide de chauffage est de l'huile chaude.

**Patentansprüche**

**1.** Differentialdruck-Flüssigkeitspegelmesser für das Messen einer Flüssigkeitsmenge, basierend auf einem Druckunterschied zwischen einem Flüssigkeitsdruck und einem Bezugsdruck, mit einem Meßgefäß (10) zur Aufnahme einer Flüssigkeit, deren Menge zu messen ist:
einen Druckunterschiedsdetektor (38) und Einrichtungen für das Erzeugen eines Bezugsdruckes und für dessen Übertragung zu diesem Druckunterschiedsdetektor (38), **dadurch gekennzeichnet,** daß dieser Differentialdruck-Flüssigkeitspegelmesser des weiteren umfaßt Druckübertragungseinrichtungen, umfassend eine Trennwand (14) und eine zwischen dieser Trennwand (14) und diesem Druckunterschiedsdetektor (38) eingeschlossene Flüssigkeit (16A) zur Übertragung des Druckes dieser Flüssigkeit in diesem Gefäß (10) zu diesem Druckunterschiedsdetektor (38) und isothermische Einrichtungen, um eine vorherbestimmte Temperatur dieser abgeschlossenen Flüssigkeit (16A) aufrecht zu erhalten, diese isothermischen Einrichtungen enthalten eine Kammer (28), welche wenigstens einen Teil dieser abgeschlossenen Flüssigkeit (16A) umschließt und Einrichtungen, um in dieser Kammer eine Heizflüssigkeit mit dieser vorherbestimmten Temperatur zu zirkulieren, diese Kammer weist ein die Kammer (28) verschließendes Bodenelement auf, diese Zirkulierungseinrichtungen umfassen einen Einlaß (30) für diese Heizflüssigkeit und einen Auslaß (32) für diese Heizflüssigkeit, welche beide durch dieses Bodenelement durchfließen, wobei sich dieser Einlaß (30) und Auslaß an entgegengesetzten Seiten dieser Kammer in die Kammer hinein öffnen und wobei ein aufrechtstehendes Ausflußrohr (32b) an seinem unteren Ende mit diesem Bodenelement verbunden ist und mit diesem Heizflüssigkeitsauslaß (32) in Verbindung steht, dieses Rohr endet an seinem oberen Ende unterhalb dem oberen Ende der Kammer (28), um als ein Überflußrohr zu dienen, durch welches diese Heizflüssigkeit, welche in diese Kammer (28) durch diesen Heizflüssigkeitseinlaß eingetreten ist, fließt, nachdem sie nach oben durch diese Kammer (28) und von einer Seite zur anderen Seite dieser Kammer (28) geflossen ist.

2. Differentialdruck-Flüssigkeitspegelmesser nach Anspruch 1, wobei dieser Bezugsdruck der atmosphärische Druck ist.

3. Differentialdruck-Flüssigkeitspegelmesser nach Anspruch 1, wobei diese Heizflüssigkeit warmes Wasser ist.

4. Differentialdruck-Flüssigkeitspegelmesser nach Anspruch 1, wobei diese Heizflüssigkeit warmes Öl ist.

# FIG. 1

# FIG. 2

1000mm H2O

# FIG. 3
## (a)

## (b)

# FIG. 4

## (a)

## (b)

# FIG. 5

EP 0 255 960 B1